# EUROPÄISCHE PATENTSCHRIFT

(11) **EP 2 980 662 B1**
(45) Veröffentlichungstag und Bekanntmachung des Hinweises auf die Patenterteilung: **10.11.2021**
(21) Anmeldenummer: 15178215.8
(22) Anmeldetag: 24.07.2015
(51) Int. Cl.: G05B 19/042, G05B 19/05, G06F 21/55, G06F 21/52, G06F 21/56, H04L 29/06

(54) **SCHUTZ EINER AUTOMATISIERUNGSKOMPONENTE VOR PROGRAMMMANIPULATIONEN DURCH SIGNATURABGLEICH**
PROTECTION FOR AN AUTOMATION COMPONENT AGAINST PROGRAM MANIPULATION BY MEANS OF SIGNATURE MATCHING
PROTECTION D'UN COMPOSANT D'AUTOMATISATION CONTRE DES MANIPULATIONS DE PROGRAMME PAR MISE EN CORRESPONDANCE DE SIGNATURE

(30) Priorität: 30.07.2014 DE 102014214934
(43) Veröffentlichungstag der Anmeldung: 03.02.2016
(73) Patentinhaber: Siemens Aktiengesellschaft, 80333 München (DE)
(72) Erfinder: Schönemann, Peter, 91058 Erlangen (DE)

(56) Entgegenhaltungen:
- EP-A1- 1 970 782
- EP-A2- 1 760 623
- WO-A1-2012/019659
- WO-A1-2014/109645
- US-A1- 2013 061 328
- US-B1- 6 424 258
- None

## Beschreibung

Die Erfindung betrifft ein Verfahren zur Feststellung einer Bedrohungslage für eine Automatisierungskomponente.

Automatisierungssysteme in der Fabrikautomation bestehen aus einer Reihe von unterschiedlichen Automatisierungskomponenten im Wesentlichen in der Steuerungs- und Feldebene wie beispielsweise speicherprogrammierbare Steuerungen. Unter dem Begriff Automatisierungskomponente ist dabei jede intelligente und mit Software ausgestattete Feld- oder Steuerungskomponente zu verstehen und insoweit sollen auch Antriebs-, Überwachungs- oder Sensorkomponenten vom Begriff umfasst sein. Die Automatisierungskomponenten sind in der Regel untereinander vernetzt und werden von verschiedenen, hierarchisch angeordneten, übergeordneten Steuerungen bedient und/oder überwacht. Die hierarchisch übergeordneten Steuerungsebenen sind als Operator-Level, Management-Level oder Enterprise-Level bekannt.

Zunehmend werden auch Automatisierungskomponenten in der Steuerungs- und Feldebene Ziele sogenannter Cyberangriffe und Programmmanipulation, die Auswirkungen auf die Steuerung beispielsweise eines Fertigungsprozesses haben könnten. Heute gibt es schon eine Reihe von Sicherheitskomponenten, die das Eindringen in das Automatisierungssystem als Ganzes weitgehend verhindern, zumindest aber erkennen sollen. Dies sind in der Regel aber singuläre, allein stehende Maßnahmen, die die industrielle Sicherheit von Automatisierungskomponenten erhöhen, die aber aktuell alleine nicht ausreichen, umfassenden Manipulationsschutz zu gewährleisten. Auch ist nicht bekannt, diese Sicherheitskomponenten in geeigneter Weise zu kombinieren. So bieten Automatisierungskomponenten mit "Integrated Security Funktionen" gegenwärtig schon einen gewissen Schutz vor Programmänderungen. Bekannte und bereits integrierte Schutzmechanismen sind Know-how Schutz, Kopierschutz oder Zugriffsschutz. Soweit Manipulationsschutz gewährleistet werden soll, bezieht sich dieser nur auf die Übertragung von Daten in die vorgenannten übergeordneten Ebenen, insbesondere von und zum HMI (Human Machine Interface). Allerdings können auch diese Schutzmechanismen mit entsprechendem Aufwand umgangen werden (z.B. Brute-Force). Soweit dennoch eine Programmänderung erfolgt, sind die Programmmanipulationen - nämlich die Änderungen des Prozessverhaltens - mit diesen Mitteln nicht erkennbar.

Bekannt sind auch sog. SIEM-Lösungen (Security Information and Event Management), die in Automatisierungsumgebungen integriert werden. Dabei werden sicherheitsrelevante Kenngrößen aus den Komponenten extrahiert, um anschließend mit diesen einen komplexen Anlagenschutz gewährleisten zu können. Dabei werden über gängige Protokolle wie SNMP oder Syslog allgemeine Informationen eingesammelt und gegebenenfalls mit weiteren Informationen von Sicherheitskomponenten in Bezug zueinander gesetzt. Aber auch hier ist ein umfassender Zugriff auf alle Größen, die das zyklische Verhalten einer Automatisierungskomponente beschreiben, nicht möglich. Eine Programmmanipulation ist somit nicht erkennbar.

Aus der US 6 424 258 A1 ist bekannt, das Verhalten einer Automatisierungskomponente parallel zur Steuerung des Prozesses durch die Automatisierungskomponente durch eine weitere Komponente zu simulieren. Im Rahmen dieses Verfahrens werden die von der Automatisierungskomponente an ihren Eingängen eingelesenen und an ihren Ausgängen ausgegebenen Prozesszustände auch der weiteren Komponente zugeführt. Die weitere Komponente ermittelt anhand der Prozesszustände an den Eingängen die korrespondierenden Ausgänge und vergleicht sie mit den ihr zugeführten Ausgängen. Im Falle einer Abweichung wird eine Alarmmeldung ausgegeben.

Aus der US 2013/0 061 328 A1 ist ein Verfahren zur Überwachung einer elektronischen Komponente bekannt. Bei diesem Verfahren werden immer wieder Testroutinen angestoßen, aufgrund derer bestimmte Maßnahmen ergriffen werden. Es wird überprüft, ob die tatsächlich bewirkten Maßnahmen mit erwarteten Maßnahmen übereinstimmen. Im Falle einer Abweichung wird eine Alarmmeldung ausgegeben.

Aus der WO 2014/109 645 A1 ist ein Verfahren zur Feststellung einer Bedrohungslage für eine Automatisierungskomponente bekannt. Im Rahmen dieses Verfahrens werden Daten von einem oder mehreren Sensoren und von Agenten mit zuvor gesammelten Daten verglichen. Anhand des Vergleichs wird auf das Bestehen oder Nichtbestehen einer Bedrohungslage geschlossen. Agenten im Sinne der genannten WO-Schrift sind Computerprogramme, die auf ihre Umgebung reagieren und ohne direkte Überwachung eine Funktion durchführen. Die Art der Funktion ist in der genannten WO-Schrift nicht näher spezifiziert.

Es ist demnach Aufgabe der Erfindung, ein Verfahren anzugeben, welches eine Bedrohungslage für Automatisierungskomponenten feststellt, indem es eine Programmmanipulation in der Automatisierungskomponente sicher erkennt. Die Aufgabe wird gelöst durch ein Verfahren mit den Merkmalen des Anspruchs 1.

Die jeweilige Automatisierungskomponente arbeitet im Wesentlichen in einem zyklischen Betrieb, wie er beispielsweise von speicherprogrammierbaren Steuerungen bekannt ist. Dabei werden die Prozesszustände an den Eingängen der Automatisierungskomponente zyklisch eingelesen und die Ausgänge der Automatisierungskomponente zyklisch und korrelierend mit dem zyklischen Einlesen ausgegeben. Damit gibt es zu jedem Prozesszustand am Eingang und am Ausgang der Automatisierungskomponente ein Prozessabbild. Dieses Prozessabbild im Betrieb der Anlage wird als Ist-Programmverhalten verstanden, weil das Programm der Automatisierungskomponente zu einem bestimmten Eingangsprozessbild ein bestimmtes Ausgangsprozessbild erzeugt. In einem ersten Schritt wird nunmehr dieses Ist-Programmverhalten ermittelt bzw. erfasst. Unter Ermittlung oder Erfassung wird beispielsweise verstanden, dass dieses Ist-Programmverhalten, in geeigneter Weise mit gleichzeitiger Erfassung des jeweiligen Zeitpunktes, in Form eines sog. "Fingerabdrucks" oder einer ersten Signatur in einer Datei geeigneten Formats gespeichert wird. Denkbar ist es allerdings auch, dass eine Abspeicherung in einer Datei nicht erfolgt, sondern die Signatur im Speicher, beispielsweise der Automatisierungskomponente, vorgehalten wird. In einem zweiten Schritt wird nunmehr diese erste Signatur mit einer zweiten Signatur verglichen, wobei diese zweite Signatur einem Soll-Programmverhalten entspricht. Unter dem Soll-Programmverhalten ist dabei das Programmverhalten zu verstehen, das bei einer Automatisierungskomponente zu erwarten ist, die frei von etwaigen Manipulationen ist. Eine Anzahl von Soll-Programmverhalten wird beispielsweise bestimmt und gespeichert, bevor die eigentliche Überwachung erfolgt. Eine Speicherung kann in einem geeigneten Format erfolgen, wobei in geeigneter Weise das Ist-Programmverhalten in einem gleichen Format vorliegt. Ein Vergleich zwischen Ist- und Soll-Programmverhalten kann dann beispielsweise dadurch erfolgen, dass sog. Hash-Werte beider Dateien miteinander verglichen werden und somit feststellbar ist, ob sich die Daten wesentlich unterscheiden. Andere Mechanismen, einen Vergleich zwischen den Dateien durchzuführen sind ebenfalls möglich. Eine Ableitung einer Bedrohungslage, d.h. liegt eine solche vor oder nicht, erfolgt dann in einem nächsten Schritt durch die qualitative Bewertung des Ergebnisses des Vergleichs. Stimmt das Ist-Programmverhalten mit einem gespeicherten Soll-Programmverhalten weitestgehend überein, so liegt keine Bedrohung vor. Umgekehrt könnte der Fall, dass einem Ist-Programmverhalten kein Soll-Programmverhalten entspricht, eine Bedrohungslage indizieren. Unter weitestgehender Übereinstimmung soll hier verstanden werden, dass es nicht notwendigerweise einer absoluten und 100%-igen Übereinstimmung bedarf, sondern dass - in Abhängigkeit des Einzelfalles - auch ein bestimmter, vom Einzelfall abhängiger Grad der Abweichung zugelassen werden kann und dennoch eine qualifizierte Aussagen über die Bedrohungslage erfolgen kann.

Auf diese Weise ist es möglich, kontinuierlich das Programmverhalten zu überwachen und Programmmanipulationen schnell zu erkennen. Bei erkannten Abweichungen zwischen erster und zweiter Signatur kann davon ausgegangen werden, dass eine Änderung im Programm vorgenommen wurde, was wiederum ein Indiz auf eine mögliche Manipulation darstellt. Etwaige Maßnahmen können eingeleitet werden, beispielsweise die Alarmierung und/oder die automatische Überführung des Prozesses in einen sicheren Zustand.

Gemäß einem anderen Aspekt der Erfindung werden sämtliche Soll-Programmverhalten durch Fuzzy-Logiken und/oder neuronale Netze und/oder Simulationssoftware in einer Anlernphase ermittelt, wobei die so ermittelten Soll-Programmverhalten der Automatisierungskomponente in der Automatisierungskomponente selbst oder in der übergeordneten Steuerung gespeichert werden können. Ziel ist es, das Verhalten einer Automatisierungskomponente im originalen und unveränderten, d.h. im nicht manipulierten Zustand, über eine gewisse Zeit anzulernen und dieses Verhalten anschließend als eine zweite Signatur abzuspeichern. Dabei spielt es im Wesentlichen keine Rolle, um welche Art von Baugruppen es sich im Einzelnen handelt, solange das Verhalten einen zyklischen Ablauf aufweist. Der Aufbau von Fuzzy-Logiken oder neuronalen Netzen als solche ist bekannt und wird hier nicht weiter vertieft. Notwendig ist lediglich, dass sämtliche das Verhalten der Automatisierungskomponente beeinflussende Größen und Variablen betrachtet werden. Diese sind vorher zu definieren und in die Logik zu integrieren. Ein möglicher Weg das Soll-Programmverhalten empirisch zu bestimmen, besteht in der Anwendung von Simulationssoftware. Mit einer solchen Simulationssoftware wäre es vergleichsweise leicht möglich, das Soll-Programmverhalten schon vor Auslieferung einer Anlage zu ermitteln und zu speichern. Gleichfalls würde es dann möglich sein, bei gewünschten Änderungen - beispielsweise während eines späteren Serviceeinsatzes - das geänderte Soll-Programmverhalten wieder einzulernen, d.h. eine neue Signatur für das diese Änderung betreffenden Soll-Programmverhalten zu erzeugen und abzuspeichern.

In einer Ausführungsform ist das ermittelte Soll-Programmverhalten in der Automatisierungskomponente gespeichert. Dies ist besonders vorteilhaft, weil sich somit die Intelligenz auf die Steuer- und Feldebene verlagert und somit jede Automatisierungskomponente ihren Manipulationsversuch melden kann. Gleichzeitig wird der Datenverkehr in dem industriellen Netzwerk kaum zusätzlich belastet.

In einer anderen Ausführungsform ist das ermittelte Soll-Programmverhalten der Automatisierungskomponente in einer übergeordneten Steuerungsebene gespeichert. Dies ist in den Fällen von Vorteil, in denen auch Automatisierungskomponenten in die Fabrikautomation einzubinden sind, die keine oder nur eingeschränkte Möglichkeiten (Speicherplatz, Prozessorleistung) bieten, weitere prozessor- und speicherintensive Funktionen dort anzulagern, ohne die Bearbeitungszeiten für die Prozesssteuerung negativ zu beeinflussen. Vorteilhaft könnten auf diese Weise auch Automatisierungskomponenten verschiedener Hersteller integriert werden. Mischvarianten wären ebenso möglich.

Nach einem wichtigen Aspekt der Erfindung erfolgt die Speicherung des Soll-Programmverhaltens derart, dass nach Speicherung des Soll-Programmverhaltens nur lesender Zugriff möglich ist. Denn um eine möglichst hohe Sicherheit gewährleisten zu können, ist darauf zu achten, dass die Signatur des Soll-Programmverhaltens nicht manipuliert werden kann. Daher ist diese auch so zu hinterlegen, dass Änderungen nur vor Ort und nicht durch einen Fernzugriff vorgenommen werden können. Auf diese Weise wird sichergestellt, dass das Soll-Programmverhalten keiner Änderung von außen unterworfen werden kann.

Die zyklische Ermittlung des Ist-Programmverhaltens hat einen Einfluss auf die Prozessorlast und damit - sofern die Prozeduren in der Automatisierungskomponente ablaufen - auf die Bearbeitungszeiten für die Prozesssteuerung und -überwachung. Dort, wo die Prozeduren in übergeordneten Steuerungen ablaufen, hat sie einen zusätzlichen Einfluss auf die Netzbelastung. Weiterhin ist die Abtastrate für die Ermittlung des Ist-Programmverhaltens abhängig von der Art und dem Einsatzfall der Automatisierungskomponente. So bedürfen langsame oder träge Prozesse keiner übermäßig hohen Abtastrate. Es ist deshalb vorteilhaft, das Zeitintervall, die Abtastrate, für die Ermittlung des Ist-Programmverhaltens einstellbar zu gestalten. Bevorzugt sollte die Abtastrate in einem Bereich von 2 ms bis 5 min einstellbar sein.

In einer besonders vorteilhaften Ausführungsform wird die aus dem Vergleich abgeleitete Bedrohungslage zusätzlich mit unabhängig ermittelten Ergebnissen zur Bedrohungslage anderer Sicherheitskomponenten verknüpft. Auf diese Weise können vorteilhaft mögliche Fehlalarme weiter reduziert werden. Dabei kann die Überwachung der Signaturen von Ist- und Soll-Programmverhalten mit einer weiteren Lösung, wie beispielsweise einer SIEM-Lösung (Security Information & Event Management) kombiniert werden. Eine SIEM-Lösung ist beispielhaft unabhängig von der hier bisher vorgeschlagenen Lösung. Auf diese Weise können auch mögliche Verhaltensmuster der Automatisierungskomponente, die nicht angelernt werden konnten und somit eine Signaturabweichung mit sich bringen würden, keine Bedrohungslage ermitteln oder eine Bedrohungslage niedrigerer Priorität signalisieren, die beispielsweise kein automatisches Eingreifen in den Prozess nach sich ziehen würde. Würde umgekehrt eine Signaturabweichung bei einem Vergleich von Ist- und Soll-Programmverhalten erkannt, nachdem auch ein potentieller Angriff durch eine weitere Sicherheitskomponente unabhängig davon erkannt worden ist, wäre bei der Automatisierungskomponente mit hoher Wahrscheinlichkeit auch von einer echten Programmmanipulation auszugehen, und es können Gegenmaßnahmen schnell eingeleitet werden.

Ein weiterer Aspekt der Erfindung umfasst ein Computerprogrammprodukt zur Feststellung einer Bedrohungslage einer Automatisierungskomponente innerhalb einer Steuerungs- und Überwachungsanlage. Der Begriff der Automatisierungskomponente soll dabei jede Art von Automatisierungskomponenten umfassen, einschließlich sog. intelligente Sensoren oder Aktoren oder Mischformen aus beiden, die eine prozessor- und damit softwaregesteuerte Vorverarbeitung oder -auswertung von Prozess- bzw. Anlagendaten durchführen. Unter den Begriff der Automatisierungskomponente sollen neben sog. Speicherprogrammierbaren Steuerungen jedwede intelligente Feldgeräte fallen, beispielsweise Motoren, Umrichter oder ähnliches. Das Computerprogrammprodukt erzeugt eine Vielzahl von Soll-Programmverhalten der Automatisierungskomponente. Diese Soll-Programmverhalten definieren das vorgesehene Norm-Verhalten der Anlage, d.h. die Ausgangsparameter oder Ausgangssignale der jeweiligen Automatisierungskomponente an den Prozess, basierend auf den jeweiligen Eingangsparametern oder Eingangssignalen der Steuerungs- und Überwachungsanlage, im Wesentlichen der jeweiligen Automatisierungskomponente. Wegen der sich im Betrieb der Steuerung- und Überwachungsanlage ändernden Bedingungen, beispielsweise erfordern sich ändernde Eingangssignale andere Ausgangssignale, wird das gesamte Programmverhalten durch eine Vielzahl von einzelnen, im Wesentlichen jeweils einen Prozesszustand beschreibenden Soll-Programmverhalten beschrieben. Diese Normprozesszustände werden als Soll-Programmverhalten in geeigneter Weise gespeichert. Dies kann während in einer dem eigentlichen Betrieb vorgeschalteten sog. Anlernphase erfolgen, in der sämtliche oder wenigstens die wichtigen Prozesszustände durchgefahren oder simuliert werden. In geeigneter Weise kann eine Simulationssoftware die Anlernphase unterstützen. Denkbar wäre es auch, Soll-Programmzustände auch in gewissen Phasen des eigentlichen Betriebes aufzunehmen, solange in dieser Phase ein Bedrohungsangriff oder eine Manipulation des Programmverhaltens durch einen Angriff ausgeschaltet werden kann. So könnte beispielsweise während einer solchen Phase ein Zugang zu unsicheren in der Regel externen Netzen physikalisch verhindert werden.

Durch das Computerprogrammprodukt wird im laufenden Betrieb das aktuelle Programmverhalten der jeweiligen Automatisierungskomponente zyklisch ermittelt. Unter zyklischer Ermittlung wird verstanden, dass zu einem bestimmten Zeitpunkt der Ist-Prozesszustand, d.h. die Eingangsparameter oder Eingangssignale und die im Wesentlichen korrespondierenden Ausgangsparameter oder Ausgangssignale der jeweiligen Automatisierungskomponente, im Wesentlichen in Echtzeit erfasst und in geeigneter Weise zwischengespeichert werden. Die Zwischenspeicherung kann dabei in flüchtigen oder nichtflüchtigen Speichern, in der Regel magnetischen Speichern, erfolgen. Die Ermittlung des Ist-Prozesszustandes erfolgt in gewissen Zeitabständen wiederkehrend. Nach Ermittlung des Ist-Prozesszustandes erfolgt ein Vergleich mit den im Speicher vorliegenden Soll-Programmverhalten. Ziel des Vergleiches ist es, für das jeweilige Ist-Programmverhalten eine Entsprechung in der Vielzahl von Soll-Programmverhalten zu finden, welche in gespeicherter Form vorliegen. Entsprechende Methoden zum Vergleich beispielsweise verschiedener Dateien sind bekannt. So könnten nach einer Methode die jeweiligen Hash-Werte der Dateien miteinander verglichen werden, sofern eine Überprüfung auf Identität der Dateien erfolgen soll. Denkbar wären aber auch Vergleichsmethoden, die nicht auf Identität abzielen, sondern eine gewisse, aber für den Zweck der Identifizierung einer Bedrohungs- resp. Manipulationslage unkritische Abweichung zulassen. Basierend auf dem Vergleich zwischen Soll-Programmverhalten und Ist-Programmverhalten erfolgt die Ableitung einer Bedrohungslage, wobei bei Feststellung von Abweichung in der Regel schon eine Manipulation der Anlage vorgenommen worden ist, was in geeigneter Weise einen Alarm auslöst.

Um Fehlalarme soweit als möglich auszuschließen, ist es besonders vorteilhaft, die aus dem Vergleich abgeleitete Bedrohungslage zusätzlich mit unabhängig ermittelten Ergebnissen zur Bedrohungslage anderer Sicherheitskomponenten zu verknüpfen und im weiteren einen Alarm erst dann auszulösen, wenn im Wesentlichen zeitgleich auch eine Bedrohungslage vorliegt, die durch andere Sicherheitskomponenten erkannt worden ist.

Unter anderen Sicherheitskomponenten sind zu verstehen, bekannt Lösungen, wie beispielsweise sog. SIEM-Lösung (Security Information & Event Management) . Aber auch andere Lösungen, wie sie unter dem Begriff "Integrated Security Function" zusammengefasst werden, beispielsweise Schutzmechanismen, die auf Kopier- oder Zugriffsschutz abzielen, können mit der hier vorgeschlagenen Lösung verknüpft werden. Unter Verknüpfung ist dabei in erster Linie zu verstehen, dass die Ergebnisse, d.h. die Alarmmeldungen der einen oder mehrerer unterschiedlicher anderer Sicherheitskomponenten, logisch mit der Alarmmeldung der erfindungsgemäß vorgeschlagenen Lösung kombiniert werden und eine Alarmmeldung nur dann erzeugt wird, wenn zumindest eine Alarmmeldung nach der erfindungsgemäß vorgeschlagenen Lösung und eine Alarmmeldung einer anderen Sicherheitskomponente vorliegen, wobei das Vorliegen der zumindest zwei Alarmmeldungen vorteilhaft zeitlich korrelieren sollte, d.h. innerhalb eines zu definierenden Zeitfensters auftritt.

Allerdings soll die Erfindung nicht auf diese eine Kombinationsmöglichkeit beschränkt sein, sondern weitere geeignete Kombinationsmöglichkeiten sollen ausdrücklich umfasst sein.

Die oben beschriebenen Eigenschaften, Merkmale und Vorteile dieser Erfindung sowie die Art und Weise, wie diese erreicht werden, werden in Verbindung mit den Figuren näher erläutert werden. Hierbei zeigen in schematischer Darstellung:
- FIG 1: eine Automatisierungsanlage mit Feld- und Steuerungsebene und übergeordneter Bedienebene;
- FIG 2: den erfindungsgemäßen Ablauf innerhalb einer Automatisierungskomponente.

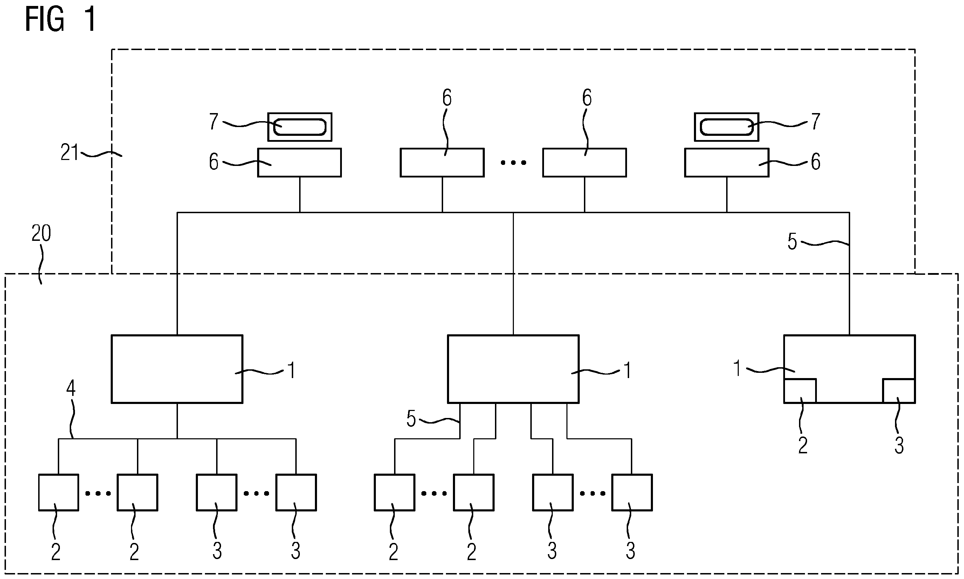

FIG 1 zeigt in einer allgemeinen Darstellung eine Feld- und Steuerungsebene 20, der eine Bedienebene (Operator-Level) 21 übergeordnet ist. Feld- und Steuerungsebene 20 und Bedienebene 21 sind durch ein industrielles Kommunikationsnetzwerk 5 miteinander verbunden. Die Bedienebene umfasst eine Anzahl von Recheneinheiten 6, wobei alle oder ein Teil der Recheneinheiten 6 mit Anzeige- und Eingabeeinheiten 7 verbunden sein können, um Daten einzugeben und/oder anzuzeigen. Der Bedienebene 21 sind in der Regel weitere Ebenen übergeordnet und durch ein Kommunikationsnetzwerk miteinander verbunden; diese weiteren - hier nicht dargestellten - Ebenen sind als Management-Level oder Enterprise-Level bekannt.

Die Steuerungs- und Feldebene 20 umfasst eine Vielzahl von Automatisierungskomponenten 1, wobei unter einer Automatisierungskomponente jedwede intelligente, d.h. mittels Softwarealgorithmen betriebene oder beeinflussbare Art von Feldgeräten verstanden werden soll. Beispiele für solche Automatisierungskomponenten sind programmierbare Steuerungen für Überwachungs- und/oder Steuerungs- bzw. Regelungsaufgaben. Zu solchen Feldgeräten können - ohne darauf beschränkt zu sein -beispielsweise auch Motoren oder Umrichter gehören, soweit diese eine intelligente Kommunikationsschnittstelle besitzen und mittels Software angesteuert und/oder überwacht werden. Die Automatisierungskomponenten 1 können wiederum mit Sensoren 2 und/oder Aktoren 3 verbunden werden, um Daten wie beispielsweise Schaltzustände, Drücke, Temperaturen usw. vom Prozess zu erhalten bzw. auf den Prozess schaltend, steuernd oder regelnd Einfluss zu nehmen. Eine solche Wirkverbindung kann ebenfalls über Bus- oder Netzwerkverbindungen 4 erfolgen, wie sie beispielsweise unter der Bezeichnung Profibus oder Profinet bekannt sind. Sensoren 2 und Aktoren 3 können aber auch einzeln über digitale oder analoge Hardwareverbindungen 5 mit der Automatisierungskomponente 1 verbunden sein, oder sie sind integraler Bestandteil einer Automatisierungskomponente 1 selbst. Die Automatisierungskomponenten 1 lesen zyklisch Daten von den Sensoren 2 ein und geben zyklisch aufgrund der eingelesenen Daten, aufgrund von Bedienbefehlen des Anwenders und/oder eines in der Automatisierungskomponente 1 hinterlegten Softwarealgorithmus Steuerungsbefehle an die Aktoren heraus.

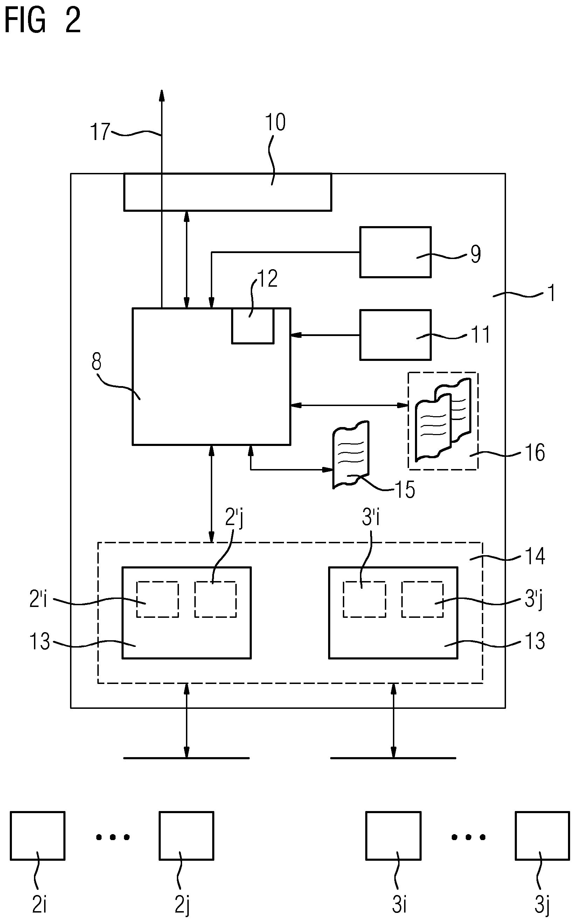

FIG 2 verdeutlicht in einer schematischen Darstellung die vorliegende Erfindung. Die Automatisierungskomponente 1 umfasst eine Logikeinheit 8, wobei die Logikeinheit 8 in bekannter Weise eine in Echtzeit arbeitende Rechnerarchitektur einschließlich notwendiger Speichereinheiten beinhaltet. Die Logikeinheit 8 arbeitet die Anweisungen des Anwenderprogrammes 9 ab. Über eine Kommunikationsstelle 10 wird die Logikeinheit mit Daten anderer Automatisierungskomponenten und/ oder Daten des Bedieners versorgt bzw. stellt den anderen Komponenten und/oder dem Bediener Daten bereit. Die Logikeinheit 8 kann zeitlich mittels einer Uhr 11 synchronisiert werden. In Speicherbereichen 13 befindet sich das Abbild 2'i, 2'j aller relevanten Sensordaten 2i, 2j und das Abbild 3'i, 3'j aller relevanten Aktuatordaten zu einem bestimmten Zeitpunkt. Damit definiert der Inhalt des Speicherbereichs 13 ein Ist-Programmverhalten 14 zu einem bestimmten Zeitpunkt basierend auf ebenfalls bekannten Eingaben des Bedieners und/oder Zwischendaten 12, die die Automatisierungskomponente 1 in der Logikeinheit 8 selbst erzeugt. Dieses Ist-Programmverhalten 14 zu einem bestimmten Zeitpunkt kann als eine Signatur 15 in einem geeigneten Dateiformat gespeichert werden. Dabei kann die Speicherung innerhalb der Logikeinheit 8 oder wie nach FIG 2 außerhalb der Logikeinheit 8 erfolgen. Zu verschiedenen Zeitpunkten und/oder bei verschiedener Prozesskonstellation werden neue Signaturen 15 erstellt.

In einem Speicherbereich der Automatisierungskomponente 1 liegen - in einem geeigneten Format gespeichert - eine Reihe von Signaturen 16 vor, die das Soll-Programmverhalten darstellen. Eine Vielzahl von Signaturen 16 wurde in einer Anlernphase erzeugt und stellt ein jeweils nicht manipuliertes Norm-Programmverhalten dar, jedenfalls jedoch das Programmverhalten, welches typischerweise erwartet werden kann.

Sofern eine Signatur 15 erzeugt worden ist, wird diese von der Logikeinheit 8 mit den Signaturen 16 verglichen. Für den Vergleich von Dateien resp. Signaturen können beispielsweise bekannte Hashfunktionen eingesetzt werden. Ein Vergleich der Signaturen 15 und 16 kann auch in einer separaten Logikeinheit innerhalb der Automatisierungskomponente 1 durchgeführt werden oder bei Einsatz von Mehrkernprozessoren in einem separaten Kern. Denkbar ist auch, dass ein Vergleich in der übergeordneten Bedienebene durchgeführt wird. In einem solchen Fall sind dort auch die Signaturen 15 und 16 für die Automatisierungskomponente 1 abgelegt.

Wird festgestellt, dass der Signatur 15 keine Signatur 16 zugeordnet werden kann, es also keine Übereinstimmung zwischen der Signatur 15 und einer Signatur 16 gibt, wird eine Alarmmeldung 17 in der jeweiligen Logikeinheit (hier Logikeinheit 8) erzeugt und somit eine Bedrohungslage an die übergeordnete Bedienebene über die Kommunikationsstelle 10 gemeldet.

Die Logikeinheit 8 kann allerdings - bei Erkennen einer Bedrohungslage - auch selbst eine Aktion ausführen und die Automatisierungskomponente 1 und ggf. über die Kommunikationsstelle 10 auch weitere Automatisierungskomponenten dazu veranlassen, in einen vorher definierten, sicheren Betrieb zu wechseln.

## Patentansprüche

1. Computerimplementiertes Verfahren zur Feststellung einer Bedrohungslage für eine Automatisierungskomponente innerhalb einer Steuerungs- und Überwachungsanlage,
- wobei die Automatisierungskomponente Eingänge und Ausgänge umfasst
- wobei die Automatisierungskomponente wenigstens ein im Wesentlichen zyklisches Programmverhalten aufweist,
- wobei Prozesszustände an den Eingängen der Automatisierungskomponente zyklisch eingelesen und die Ausgänge der Automatisierungskomponente zyklisch und korrelierend mit dem zyklischen Einlesen ausgegeben werden,
- wobei das Programm der Automatisierungskomponente zu einem bestimmten Eingangsprozessbild ein bestimmtes Ausgangsprozessbild erzeugt
- womit es zu jedem der Prozesszustände am Eingang und am Ausgang der Automatisierungskomponente ein Prozessabbild gibt, das im Betrieb der Anlage ein Ist-Programmverhalten definiert,
- wobei eine Anzahl von Soll-Programmverhalten bestimmt und gespeichert wird, bevor eine Überwachung erfolgt,
- wobei die Soll-Programmverhalten jeweils den im Rahmen eines jeweiligen Zyklus eingelesenen Prozesszuständen und den korrelierenden Ausgängen unter der Voraussetzung entsprechen, dass die Automatisierungskomponente frei von Manipulationen ist, und zum Überwachen des Programmverhaltens umfassend:
a) Zyklische Ermittlung wenigstens eines Ist-Programmverhaltens;
b) Zyklischer Vergleich des Ist-Programmverhaltens mit den vorliegenden Soll-Programmverhalten;
c) Zyklische Ableitung einer Bedrohungslage aus dem Vergleich;
d) im Falle einer Bedrohungslage, Alarmierung der Bedrohungslage.

2. Verfahren nach Anspruch 1, **dadurch gekennzeichnet, dass** die Bedrohungslage dann abgeleitet wird, sofern im Wesentlichen keine Übereinstimmung zwischen dem Ist-Programmverhalten und den vorliegenden Soll-Programmverhalten vorliegt.

3. Verfahren nach einem der vorhergehenden Ansprüche, **dadurch gekennzeichnet, dass** sämtliche Soll-Programmverhalten durch Fuzzy-Logik und/oder neuronale Netze und/oder Simulationssoftware in einer Anlernphase ermittelt sind.

4. Verfahren nach einem der vorhergehenden Ansprüche, **dadurch gekennzeichnet, dass** die ermittelten Soll-Programmverhalten in der Automatisierungskomponente gespeichert werden.

5. Verfahren nach einem der Ansprüche 1 bis 3, **dadurch gekennzeichnet, dass** die ermittelten Soll-Programmverhalten der Automatisierungskomponente in einer übergeordneten Steuerungsebene gespeichert werden.

6. Verfahren nach einem der vorhergehenden Ansprüche, **dadurch gekennzeichnet, dass** die Abtastrate für die zyklische Ermittlung des Ist-Programmverhaltens einstellbar sind, bevorzugt in Bereich von 2ms bis 5min.

7. Verfahren nach einem der vorhergehenden Ansprüche, **dadurch gekennzeichnet, dass** die aus dem Vergleich abgeleitete Bedrohungslage zusätzlich mit unabhängig ermittelten Ergebnissen zur Bedrohungslage anderer Sicherheitskomponenten verknüpft wird.

8. Verfahren nach Anspruch 7, **dadurch gekennzeichnet, dass** der Alarm generiert wird, sofern im Wesentlichen zeitgleich auch Bedrohungslagen anderer Sicherheitskomponenten vorliegen.

9. Computerprogrammprodukt, zur Feststellung einer Bedrohungslage einer Automatisierungskomponente innerhalb einer Steuerungs- und Überwachungsanlage,
- wobei die Automatisierungskomponente Eingänge und Ausgänge umfasst,
- wobei die Automatisierungskomponente wenigstens ein im Wesentlichen zyklisches Programmverhalten aufweist,
- wobei Prozesszustände an den Eingängen der Automatisierungskomponente zyklisch eingelesen werden und die Ausgänge der Automatisierungskomponente zyklisch und korrelierend mit dem zyklischen Einlesen ausgegeben werden,
- wobei das Programm der Automatisierungskomponente zu einem bestimmten Eingangsprozessbild ein bestimmtes Ausgangsprozessbild erzeugt
- womit es zu jedem Prozesszustand am Eingang und am Ausgang der Automatisierungskomponente ein Prozessabbild gibt, das im Betrieb der Anlage als ein Ist-Programmverhalten definiert,
- wobei das Computerprogrammprodukt eine Anzahl von Soll-Programmverhalten der Automatisierungskomponente erzeugt und speichert, bevor eine Überwachung erfolgt,
- wobei die Soll-Programmverhalten jeweils den im Rahmen eines jeweiligen Zyklus eingelesenen Prozesszuständen und den korrelierenden Ausgängen unter der Voraussetzung entsprechen, dass die Automatisierungskomponente frei von Manipulationen ist,
wobei die Abarbeitung des Computerprogrammprodukts bewirkt, dass das Programmverhalten zyklisch wird, wobei
a) wenigstens ein Ist-Programmverhalten ermittelt wird,
b) das Ist-Programmverhalten mit den vorliegenden Soll-Programmverhalten verglichen wird,
c) aus dem Vergleich eine Bedrohungslage abgeleitet wird und
d) im Falle einer Bedrohungslage, Alarmierung der Bedrohungslage.

10. Computerprogrammprodukt nach Anspruch 9, **dadurch gekennzeichnet, dass** die aus dem Vergleich abgeleitete Bedrohungslage zusätzlich mit unabhängig ermittelten Ergebnissen zur Bedrohungslage anderer Sicherheitskomponenten verknüpft wird.

11. Computerprogrammprodukt nach Anspruch 10, **dadurch gekennzeichnet, dass** der Alarm generiert wird, sofern im Wesentlichen zeitgleich auch eine Bedrohungslage durch die anderen Sicherheitskomponenten erkannt wurde.

## Claims

1. Computer-implemented method for determining a threat situation for an automation component within a control and monitoring system,
- wherein the automation component comprises inputs and outputs,
- wherein the automation component has at least one essentially cyclic program behaviour,
- wherein process states at the inputs of the automation component are cyclically read in and the outputs of the automation component are output cyclically and in correlation with the cyclic reading-in,
- wherein the program of the automation component creates a specific output process image for a specific input process image,
- whereby there is a process image for each of the process states at the input and at the output of the automation component, which defines an actual program behaviour during operation of the system,
- wherein a number of required program behaviours are determined and stored, before a monitoring takes place,
- wherein the required program behaviours in each case correspond to the process states read in as part of a respective cycle and to the correlating outputs under the prerequisite that the automation component is free from any manipulations, and in order to monitor the program behaviour comprising:
a) cyclic establishment of at least one actual program behaviour;
b) cyclic comparison of the actual program behaviour with the available required program behaviours;
c) cyclic derivation of a threat situation from the comparison;
d) in the event of a threat situation, alarm signalling of the threat situation.

2. Method according to claim 1, **characterised in that** the threat situation is derived where there is essentially no match between the actual program behaviour and the available required program behaviour.

3. Method according to one of preceding claims, **characterised in that** all required program behaviours are established by fuzzy logic and/or neural networks and/or simulation software in a learning phase.

4. Method according to one the preceding claims, **characterised in that** the established required program behaviours are stored in the automation component.

5. Method according to one of claims 1 to 3, **characterised in that** the established required program behaviours of the automation component are stored at a superordinate controller level.

6. Method according to one the preceding claims, **characterised in that** the sampling rates for the cyclic establishment of the actual program behaviour are adjustable, preferably in the range from 2 ms to 5 min.

7. Method according to one of the preceding claims, **characterised in that** the threat situation derived from the comparison is additionally logically linked to independently established results for a threat situation of other security components.

8. Method according to claim 7, **characterised in that** the alarm is generated provided threat situations of other security components are essentially also present at the same time.

9. Computer program product for determining a threat situation of an automation component within a control and monitoring system,
- wherein the automation component comprises inputs and outputs
- wherein the automation component has at least one essentially cyclic program behaviour,
- wherein process states at the inputs of the automation component are cyclically read in and the outputs of the automation component are output cyclically and in correlation with the cyclic reading-in,
- wherein the program of the automation component creates a specific output process image for a specific input process image,
- whereby there is a process image for each process state at the input and at the output of the automation component, which defines an actual program behaviour during operation of the system,
- wherein the computer program creates and stores a number of required program behaviours of the automation component, before a monitoring takes place,
- wherein the required program behaviours in each case correspond to the process states read in as part of a respective cycle and to the correlating outputs under the prerequisite that the automation component is free from any manipulations,
wherein the execution of the computer program causes the program behaviour to become cyclic, wherein
a) at least one actual program behaviour is established,
b) the actual program behaviour is compared with the available required program behaviours,
c) a threat situation is derived from the comparison and
d) in the event of a threat situation, alarm signalling of the threat situation.

10. Computer program product according to claim 9, **characterised in that** the threat situation derived from the comparison is additionally logically linked with independently established results for the threat situation of other security components.

11. Computer program product according to claim 10, **characterised in that** the alarm is generated if a threat situation has also essentially simultaneously been detected by the other security components.

## Revendications

1. Procédé mis en œuvre par ordinateur de constatation d'un état de menace d'un composant d'automatisation au sein d'une installation de commande et de contrôle,
- dans lequel le composant d'automatisation comprend des entrées et des sorties,
- dans lequel le composant d'automatisation a au moins un comportement de programme sensiblement cyclique,
- dans lequel on lit cycliquement des états de processus aux entrées du composant d'automatisation et on émet, cycliquement et en corrélation avec la lecture cyclique, les sorties du composant d'automatisation,
- dans lequel le programme du composant d'automatisation produit pour une image de processus d'entrée déterminée une image de processus de sortie déterminée,
- grâce à quoi à chacun des états de processus à l'entrée et à la sortie du composant d'automatisation il y a une reproduction de processus, qui définit en fonctionnement de l'installation un comportement de programme réel,
- dans lequel on détermine et on met en mémoire un certain nombre de comportements de programme de consigne avant d'effectuer un contrôle,
- dans lequel les comportements de programme de consigne correspondent chacun aux états de processus lus dans le cadre d'un cycle respectif et aux sorties en corrélation, en supposant que le composant d'automatisation soit exempt de manipulation, et comprenant pour le contrôle du comportement du programme :
a) détermination cyclique d'au moins un comportement de programme réel ;
b) comparaison cyclique du comportement de programme réel aux comportements de programme de consigne ;
c) déduction cyclique d'un état de menace de la comparaison ;
d) dans le cas d'un état de menace, alerte sur l'état de menace.

2. Procédé suivant la revendication 1, **caractérisé en ce que** l'on déduit l'état de menace dans la mesure où il n'y a sensiblement pas de coïncidence entre le comportement de programme réel et les comportements de programme de consigne présents.

3. Procédé suivant l'une des revendications précédentes, **caractérisé en ce que** l'ensemble des comportements de programme de consigne sont déterminés dans une phase d'apprentissage par logique floue et/ou par des réseaux neuronaux et/ou par des logiciels de simulation.

4. Procédé suivant l'une des revendications précédentes, **caractérisé en ce que** l'on met en mémoire, dans le composant d'automatisation, le comportement les programmes de consigne déterminés.

5. Procédé suivant l'une des revendications 1 à 3, **caractérisé en ce que** l'on met en mémoire dans un plan de commande supérieur hiérarchiquement les comportements de programme de consigne déterminés du composant d'automatisation.

6. Procédé suivant l'une des revendications précédentes, **caractérisé en ce que** les taux d'échantillonnage pour la détermination cyclique du comportement de programme réel sont réglables, de préférence dans la plage de 2 ms à 5 min.

7. Procédé suivant l'une des revendications précédentes, **caractérisé en ce que** l'on combine l'état de menace déduit de la comparaison supplémentairement avec des résultats déterminés indépendamment d'état de menace d'autres composants de sécurité.

8. Procédé suivant la revendication 7, **caractérisé en ce qu'**on produit l'alerte dans la mesure où il y a sensiblement en même temps également des états de menace d'autres composants de sécurité.

9. Produit de programme d'ordinateur pour la constatation d'un état de menace d'un composant d'automatisation au sein d'une installation de commande et de contrôle,
- dans lequel le composant d'automatisation comprend des entrées et des sorties,
- dans lequel le composant d'automatisation a au moins un comportement de programme sensiblement cyclique,
- dans lequel on lit cycliquement des états de processus aux entrées du composant d'automatisation et on émet, cycliquement et en corrélation avec la lecture cyclique, les sorties du composant d'automatisation,
- dans lequel le programme du composant d'automatisation produit pour une image de processus d'entrée déterminée une image de processus de sortie déterminée,
- grâce à quoi à chacun des états de processus à l'entrée et à la sortie du composant d'automatisation il y a une reproduction de processus, qui définit en fonctionnement de l'installation un comportement de programme réel,
- dans lequel le produit de programme d'ordinateur produit et met en mémoire un certain nombre de comportements de programmes de consigne du composant d'automatisation avant d'effectuer un contrôle,
- dans lequel les comportements de programme de consigne correspondent chacun aux états de processus lus dans le cadre d'un cycle respectif et aux sorties en corrélation, en supposant que le composant d'automatisation soit exempt de manipulation,
- dans lequel l'élaboration du produit de programme d'ordinateur fait que le comportement de programme devient cyclique, dans lequel
a) on détermine au moins un comportement de programme réel,
b) on compare le comportement de programme réel aux comportements de programme de consigne présents,
c) on déduit de la comparaison un état de menace, et
d) dans le cas d'un état de menace, on lance une alerte sur l'état de menace.

10. Produit de programme d'ordinateur suivant la revendication 9, **caractérisé en ce que** l'on combine l'état de menace déduit de la comparaison supplémentairement à des résultats déterminés indépendamment sur l'état de menace d'autres composants de sécurité.

11. Produit de programme d'ordinateur suivant la revendication 10, **caractérisé en ce que** on produit l'alerte, dans la mesure où l'on a détecté en même temps également un état de menace par les autres composants de sécurité.
